# EUROPÄISCHE PATENTSCHRIFT

(11) **EP 3 110 740 B1**
(45) Veröffentlichungstag und Bekanntmachung des Hinweises auf die Patenterteilung: **02.10.2019**
(21) Anmeldenummer: 15707070.7
(22) Anmeldetag: 20.02.2015
(51) Int. Cl.: B66F 9/075, B60W 30/18

(54) **FLURFÖRDERZEUG MIT DIFFERENTIAL-ANTRIEBSACHSE UND DREHSCHEMEL-LENKUNG**
INDUSTRIAL TRUCK WITH DIFFERENTIAL DRIVE AXLE AND PIVOT PLATE STEERING
CHARIOT DE MANUTENTION AVEC ESSIEU D'ENTRAÎNEMENT DIFFÉRENTIEL ET DIRECTION À BOGGIE

(30) Priorität: 26.02.2014 DE 102014203510
(43) Veröffentlichungstag der Anmeldung: 04.01.2017
(73) Patentinhaber: Jungheinrich Aktiengesellschaft, 22047 Hamburg (DE)
(72) Erfinder: TRIPPLER, Peter, 85368 Moosburg (DE)
(74) Vertreter: Weickmann & Weickmann PartmbB
(86) Internationale Anmeldenummer: PCT/EP2015/053600
(87) Internationale Veröffentlichungsnummer: WO 2015/128252

(56) Entgegenhaltungen:
- EP-A1- 1 210 286
- EP-A1- 1 746 066
- GB-A- 2 383 984
- US-A- 3 003 586
- US-A- 4 157 125

## Beschreibung

Die vorliegende Erfindung betrifft ein Flurförderzeug, insbesondere ein drei- oder vierrädriges Flurförderzeug mit Front-Fahrtantrieb und Drehschemel - Lenkung.

Aus der Praxis sind verschiedene Typen von Flurförderzeugen bekannt, die sich im Hinblick auf Fahrtantrieb und Lenkung voneinander unterscheiden.

Ein erster bekannter Typ von Flurförderzeug, der sich durch seine Wendig - keit sowie einen einfachen und damit kostengünstigen Aufbau auszeichnet, ist ein dreirädriges Flurförderzeug mit Heck-Fahrtantrieb, bei dem das Hin - terrad vermittels eines Drehschemels um die Hinterrad-Hochachse drehbar an dem Fahrgestell gelagert ist. Zum Einstellen eines gewünschten Lenkwinkels wird der Drehschemel und damit das Hinterrad vermittels eines Lenkmechanismus um die Hinterrad-Hochachse bis zu einer dem gewünschten Lenkwinkel entsprechenden Stellung gedreht. Um das Flurförderzeug zu bewegen, ist es mit einem Heck-Fahrtantriebsmotor ausgestattet, um das Hinterrad zur Fahrt anzutreiben. Die beiden Vorderräder werden dabei nicht aktiv zur Fahrt angetrieben und auch nicht gelenkt.

Aufgrund des vorzugsweise um 360° oder mehr um seine Hochachse drehbar an dem Fahrgestell gelagerten Hinterrads ist ein solches Flurförderzeug zwar besonders wendig, der Heck-Fahrtantrieb bringt jedoch den Nachteil mit sich, dass die von dem Heck-Fahrtantriebsmotor theoretisch übertragbare Antriebsleistung beim Fahren unter Last unter Umständen nicht vollständig ausgenutzt werden kann, da bei Belastung eines üblicherweise im vorderen Bereich eines Fahrgestells vorgesehenen Lastaufnahmemittels das angetriebene Hinterrad entlastet wird.

Aus diesem Grund ist bei Flurförderzeugen ein Front-Fahrtantrieb verbreitet.

Bei einem kostengünstigen Front-Fahrtantrieb, bei dem die zwei Vorderräder über ein mechanisches Differentialgetriebe mit einem Front-Fahrtantriebsmotor gekoppelt sind, lassen sich die Vorteile der vorstehend beschriebenen Drehschemel-Lenkung bisher jedoch nicht vollständig ausnutzen, da sich, wie nachfolgend noch näher beschrieben, ab einem bestimmten Lenkwinkel die Vorderräder in unterschiedliche Richtungen drehen müssten, was mit einem Differentialgetriebe nicht möglich ist.

Daher wird ein Front-Fahrtantrieb mit Differentialgetriebe hauptsächlich bei vierrädrigen Flurförderzeugen eingesetzt, bei denen die zwei an gegenüberliegenden Enden einer Hinterachse vorgesehenen Hinterräder vermittels einer an der Hinterachse vorgesehenen Kinematik, etwa einem Lenktrapez, gelenkt werden, was im Vergleich zur Drehschemel-Lenkung ohnehin nur kleinere Lenkwinkel ermöglicht.

Als Flurförderzeug mit Drehschemel-Lenkung und Front-Fahrtantrieb ist bisher nur ein Typ von Flurförderzeug bekannt, bei dem die beiden Vorderräder über zwei getrennte Fahrt-Antriebsmotoren angetrieben werden, die mit einer gemeinsamen Steuereinrichtung, etwa einem elektronischen Differential, in Verbindung stehen, welche für eine Verteilung des angeforderten Moments auf die beiden Motoren sorgt. Diese Lösung ist jedoch vergleichsweise aufwändig und entsprechend teuer, da zwei gleichartige Fahrt-Antriebsmotoren für die beiden Vorderräder notwendig sind.

Aus der EP 1 210 286 B ist ein Flurförderzeug mit angetriebener Vorderachse und Differential sowie lenkbarem Hinterrad bekannt. Alternativ kann der Antrieb am Hinterrad erfolgen; die Vorderachse ist dann nicht angetrieben.

Aus der US 4 157 125 A und der EP 1 746 066 A1 sind Flurförderzeuge bekannt, bei denen Lenkschwierigkeiten vermieden werden sollen, indem das Antriebsmoment vorne und hinten abhängig vom Lenkwinkel verteilt wird. Dies soll ein "Querschrubben" des gelenkten Hinterrades vermeiden. Dabei werden Einzelradantriebe genutzt.

Vor dem Hintergrund dieses Standes der Technik besteht die Aufgabe der vorliegenden Erfindung darin, ein Flurförderzeug zu entwickeln, das einen einfachen und damit kostengünstigen Aufbau mit einer hohen Wendigkeit verbindet.

Zur Lösung dieser Aufgabe wird ein Flurförderzeug mit den Merkmalen von Anspruch 1 vorgeschlagen. Ein solches erfindungsgemäßes Flurförderzeug umfasst ein Fahrgestell, eine an dem Fahrgestell gelagerte Vorderachse, zwei an gegenüberliegenden Längsenden der Vorderachse vorgesehene Vorderräder, ein in einem vorderen Bereich, bevorzugt vor den Vorderrädern, an dem Fahrgestell vorgesehenes Lastaufnahmemittel, einen über ein Differentialgetriebe mit den zwei Vorderrädern gekoppelten Front-Fahrtantriebsmotor, um diese zur Fahrt anzutreiben, ein vermittels eines Drehschemels um eine Hinterrad-Hochachse drehbar an dem Fahrgestell gelagertes Hinterrad, einen mit dem Drehschemel gekoppelten Lenkmechanismus zum Einstellen eines Lenkwinkels des Hinterrades, einen mit dem Hinterrad gekoppelten Heck-Fahrtantriebsmotor, um dieses zur Fahrt anzutreiben, und eine Steuereinrichtung, die dazu ausgebildet ist, ein aktuell angefordertes Fahrtantriebsmoment für das Flurförderzeug auf den Front-Fahrtantriebsmotor und den Heck-Fahrtantriebsmotor zu verteilen und zwar in Abhängigkeit wenigstens von einem aktuellen Lenkwinkel des Hinterrades.

Durch den vorgenannten Aufbau kann für die normale Geradeausfahrt vorwiegend oder ausschließlich der Front-Fahrtantriebsmotor, für die Kurven - fahrt, insbesondere bei großen Lenkwinkeln, jedoch vorwiegend oder ausschließlich der Heck-Fahrtantriebsmotor genutzt werden, was die Vorteile der Drehschemel-Lenkung mit denen des Front-Fahrtantriebs verbindet.

Die Begriffe Front- und Heck-Fahrtantriebsmotor beziehen sich dabei darauf, welche Räder angetrieben werden, nicht notwendigerweise darauf, an welcher Stelle im Fahrzeug die Motoren eingebaut sind.

Im einfachsten Fall kann die Steuereinrichtung von dem Fahrer selbst bedient werden, der bei großen Lenkeinschlägen etwa den Front-Fahrtantriebsmotor ab- und den Heck-Fahrtantriebsmotor einschalten kann.

Bevorzugt handelt es sich bei der Steuereinrichtung jedoch um eine automatische Steuereinrichtung, die das angeforderte Fahrtantriebsmoment ohne Eingreifen des Fahrers auf den Front-Fahrtantriebsmotor und den Heck-Fahrtantriebsmotor verteilt.

Bevorzugt ist die Steuereinrichtung dazu ausgebildet, das aktuell angeforderte Fahrtantriebsmoment so zu verteilen, dass dann, wenn der Betrag eines aktuellen Lenkwinkels aus einer Geradeausfahrt-Stellung heraus grö - ßer als ein vorgegebener Grenzwinkel ist, das aktuell angeforderte Fahrtan - triebsmoment vorwiegend oder ausschließlich von dem Heck-Fahrtantriebsmotor erzeugt wird.

Hierbei ist der Grenzwinkel bevorzugt als der Winkel gewählt, bei dem, bei allmählicher Vergrößerung des Lenkwinkels aus der Geradeausfahrt-Stel - lung heraus, das Vorderrad auf der Kurven-Innenseite anfängt, zu blockieren.

Bei Lenkeinschlägen dieser Größenordnung ist die Fahrzeuggeschwindig - keit schon aus Sicherheitsgründen üblicherweise klein im Verhältnis zur Maximalgeschwindigkeit bei der Geradeausfahrt. Daher ist die benötigte Leistung für die Kurvenfahrt des Flurförderzeugs im Verhältnis zur Maximal - leistung eher gering. Entsprechend kann der vorwiegend zum Fahren um die Kurve eingesetzte Heck-Fahrtantriebsmotor deutlich kleiner dimensioniert und entsprechend kostengünstiger ausgeführt sein als der Front-Fahrtantriebsmotor.

Daher ist bevorzugt eine von dem Heck-Fahrtantriebsmotor erzeugbare maximale Motorleistung kleiner als eine von dem Front-Fahrtantriebsmotor erzeugbare maximale Motorleistung.

Bevorzugt sollte der Fahrer des erfindungsgemäßen Flurförderzeugs einen Übergang vom Frontantrieb zum Heckantrieb so wenig wie möglich bemerken, idealerweise überhaupt nicht.

Um einen möglichst glatten Übergang zu ermöglichen, ist bevorzugt vorgesehen, dass die Steuereinrichtung dazu ausgebildet ist, das aktuell angeforderte Antriebsmoment für das Flurförderzeug in Abhängigkeit von dem aktuellen Lenkwinkel und einer aktuellen Drehzahl des Hinterrads auf den Front-Fahrtantriebsmotor und den Heck-Fahrtantriebsmotor zu verteilen.

Handelt es sich bei dem Heck-Fahrtantriebsmotor um einen Elektromotor (etwa einen Asynchronmotor), kann zur Erfassung der aktuellen Drehzahl des Hinterrads die zur Erzeugung des Drehfeldes von dem Elektromotor ohnehin verwendete Sensorik benutzt werden. Alternativ oder zusätzlich kann ein von dem Heck-Fahrantriebsmotor unabhängiger Sensor vorgesehen sein, der die aktuelle Drehzahl des Hinterrads erfasst, welche dann an die Steuereinrichtung übermittelt wird.

Bei einem Flurförderzeug mit elektrischem Lenkantrieb, also einem Elektromotor als Lenkantriebsmotor, der die zum Einstellen des Lenkwinkels notwendige Kraft aufbringt oder unterstützt, kann der im Lenkmechanismus ohnehin vorgesehene Sensor zur Erfassung des Lenkwinkels verwendet werden, um den erfassten Lenkwinkel der Steuereinrichtung zu übermitteln. Auch hier ist es alternativ oder zusätzlich möglich, den aktuellen Lenkwinkel über einen separaten Sensor zu ermitteln.

Wie vorstehend angedeutet, erfolgt die bevorzugt elektronische Regelung des Übergangs von dem Front-Fahrtantriebsmotor (dem Haupt-Fahrmotor) auf den Heck-Fahrtantriebsmotor (den Hilfsmotor) in der Art, dass der Fahrer den Übergang nicht aktiv einleiten muss und besonders bevorzugt nicht einmal bemerkt.

Aus Kosten- und Gewichtsgründen handelt es sich bei dem Heck-Fahrtantriebsmotor bevorzugt um einen Elektromotor.

Die Art des Antriebs von dem Heck-Fahrtantriebsmotor ist jedoch nicht zwangsläufig mit der Art des Antriebs von dem Front-Fahrtantriebsmotor zu koppeln. Insbesondere ist die Erfindung nicht auf Flurförderzeuge mit rein elektrischem Fahrtantrieb beschränkt.

Denkbar ist zum Beispiel ein Flurförderzeug mit einem Verbrennungsmotor als Front-Fahrtantriebsmotor, der über ein mechanisches Differentialgetriebe mit den Vorderrädern gekoppelt ist, und mit einem elektrisch betriebenen Heck-Fahrtantriebsmotor.

Grundsätzlich kann die Art des Lenkantriebs zum Drehen des Drehschemels um die Hinterrad-Hochachse zum Einstellen eines gewünschten Lenkwinkels beliebig ausgewählt sein. Beispielsweise kann dieser Lenk-Antrieb hydraulisch, pneumatisch, elektrisch, mechanisch oder in einer beliebigen Kombination davon erfolgen.

Um den Aufbau des Flurförderzeugs zu vereinfachen können jedoch ein Lenkantrieb des Lenkmechanismus und der Heck-Fahrtantriebsmotor aus einer gleichen Energiequelle mit Energie versorgt werden, kann also der Lenk-Antrieb für die Bereitstellung der Energie für den Heck-Fahrtantriebs - motor herangezogen werden.

Insbesondere kann dann, wenn der Lenkmechanismus ein hydraulischer Lenkmechanismus ist, der Heck-Antriebsmotor als Hydraulikmotor ausgebildet sein. Hierbei könnte der Heck-Antriebsmotor als Hydraulikmotor im Drehschemel über den zum Lenken benötigten Hydraulikdruck über Ventile betrieben werden, die in Abhängigkeit von dem Lenkwinkel tätig sind. Eine elektronische Steuerung bzw. Regelung der Ventile ist ebenfalls möglich.

Weiter ist durch eine entsprechende Steuerung bzw. Regelung eine Vertei - lung des angeforderten Fahrtantriebsmoments auch in der Art möglich, dass der Heck-Fahrtantriebsmotor nicht mehr nur als Hilfsantrieb zur Kurvenfahrt genutzt sondern permanent zum Vortrieb eingesetzt wird. Hierbei ergibt sich ein Allrad-getriebenes Flurförderzeug.

Bei einer Verteilung des Fahrtantriebsmoments bzw. der Fahrtantriebsleis - tung auf Vorderachse und Hinterachse kann die Hinterachse beispielsweise auch zum Bremsen herangezogen werden, etwa bei der Rückwärtsfahrt bergab.

Bei dem erfindungsgemäßen Flurförderzeug kann es sich um ein dreirädriges Flurförderzeug mit einem (einzigen) Hinterrad und zwei Vorderrädern handeln.

Es kann jedoch auch vorgesehen sein, dass das Flurförderzeug als vierräd - riges Flurförderzeug mit zwei Hinterrädern und zwei Vorderrädern ausgebil - det ist, wobei dann jedes der zwei Hinterräder um seine Hinterrad-Hoch - achse an einem zugeordneten Drehschemel drehbar an dem Fahrgestell gelagert ist.

Hierdurch kann auch bei einem vierrädrigen Flurförderzeug der minimal mögliche Lenkradius verkleinert werden. Es bietet sich dabei an, nicht beide Hinterräder anzutreiben, sondern nur eines, das Flurförderzeug also so aus - zubilden, dass es einen einzigen Heck-Antriebsmotor umfasst, der mit nur einem der zwei Hinterräder zum Antreiben von diesem gekoppelt ist.

Hierbei sind die beiden Drehschemel bevorzugt über einen geeigneten Kopplungsmechanismus gekoppelt, um die Lenkwinkel der beiden Hinterräder geeignet aufeinander abzustimmen.

Alternativ kann vorgesehen sein, dass das vierrädrige Flurförderzeug mit zwei Drehschemeln auch zwei Heck-Antriebsmotoren umfasst, die jeweils mit einem der zwei Hinterräder gekoppelt sind, um diese zur Fahrt anzutrei - ben.

Hierdurch wird ein Allrad-getriebenes vierrädriges Flurförderzeug erhalten.

Bei dem Flurförderzeug kann es sich beispielsweise um einen Gabelstapler, handeln, bevorzugt um einen Gegengewichtsstapler oder Schubmaststapler.

Nachfolgend wird die vorliegende Erfindung anhand von einigen bevorzug - ten Ausführungsbeispielen der Erfindung sowie einigen aus dem Stand der Technik bekannten Vergleichsbeispielen näher erläutert, die in den beilie - genden Figuren dargestellt sind.

Dabei zeigen:
- Fig. 1: ein erstes Ausführungsbeispiel eines erfindungsgemäßen Flurförderzeugs in einer Draufsicht,
- Fig. 2: den Gegenstand von Figur 1 in einer Seitenansicht,
- Fig. 3: in den Teilabbildungen a) bis c) den Gegenstand von Figur 1 bei drei verschiedenen Lenkwinkeln,
- Fig. 4: in den Teilabbildungen a) und b) zwei Variationen eines zweiten Ausführungsbeispiels für ein erfindungsgemäßes Flurförderzeug,
- Fig. 5: den Gegenstand von Figur 4 in einer Seitenansicht und
- Fig. 6: in den Teilabbildungen a) bis d) vier Vergleichsbeispiele für aus dem Stand der Technik bekannte Flurförderzeuge.

Bei allen Figuren handelt es sich um stark vereinfachte, schematische Darstellungen, die lediglich das Prinzip der Erfindung verdeutlichen sollen und insbesondere nicht maßgeblich zu verstehen sind.

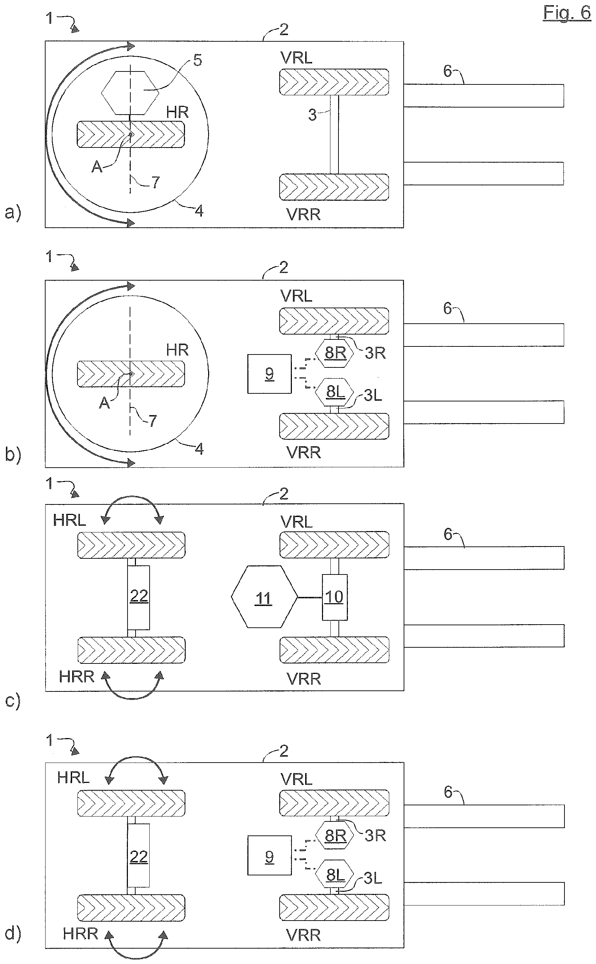

Einleitend werden zunächst anhand von Figur 6 vier Vergleichsbeispiele von aus dem Stand der Technik bekannten Flurförderzeugen beschrieben. Dabei werden für gleiche bzw. entsprechende Bauteile oder Merkmale der verschiedenen Vergleichsbeispiele jeweils die gleichen Bezugszeichen verwen - det.

Die bekannten Flurförderzeuge 1 umfassen jeweils ein Fahrgestell 2 sowie zwei Vorderräder VRL, VRR, die an zwei gegenüberliegenden Längsenden einer ein- bzw. zweiteilig ausgebildeten Vorderachse 3 (Teilabbildungen a) und c)) bzw. 3L, 3R (Teilabbildungen b) und d))vorgesehen sind.

Im vorderen Bereich des Fahrgestells 2, hier vor den Vorderrädern VRL, VRR, ist ein hier nur schematisch angedeutetes Lastaufnahmemittel 6, hier in Form einer Lastgabel vorgesehen, welches die Aufnahme und das Anheben von Lasten ermöglicht.

Bei dem in Teilabbildung a) dargestellten Flurförderzeug 1 handelt sich um ein Flurförderzeug mit Heck-Fahrtantrieb, die übrigen, in den Teilabbildun - gen b) bis d) dargestellten Flurförderzeuge sind frontgetrieben.

Bei dem heckgetriebenen Flurförderzeug 1 aus Teilabbildung 6a) ist das Hinterrad HR vermittels eines Drehschemels 4 um die Hinterrad-Hochachse A drehbar an dem Fahrgestell 2 gelagert, die senkrecht zur Zeichenebene von Figur 6a) verläuft.

Die Einstellung eines Lenkwinkels durch Drehen des Drehschemels um die Achse A erfolgt über einen in Figur 6 nicht dargestellten Lenkmechanismus.

Das Hinterrad HR wird durch einen an dem Drehschemel 4 gelagerten Heck-Fahrtantriebsmotor 5 zur Rotation um die Hinterrad-Achse 7 angetrieben, wodurch das Flurförderzeug 1 bewegt wird.

Wie einleitend erläutert, ist ein solches dreirädriges Flurförderzeug mit rei - nem Heck-Fahrtantrieb und Drehschemel-Lenkung zwar sehr wendig, wird das Lastaufnahmemittel 6 jedoch belastet, so kippt das Fahrgestell 2 leicht nach vorne. Dadurch wird das Hinterrad HR entlastet und die Leistung von dem Heck-Fahrtantriebsmotor 5 kann nicht optimal zum Fahrtantrieb des Flurförderzeugs 1 ausgenutzt werden.

Aus diesem Grund, werden im Stand der Technik Flurförderzeuge mit Frontantrieb bevorzugt, die in den Teilabbildungen b) bis d) von Figur 6 darge - stellt sind.

Aus nachfolgend noch genauer erläuterten Gründen müssen im Stand der Technik dann, wenn die aufgrund der Drehschemel-Lenkung mögliche Wendigkeit auch beim Front-Fahrtantrieb erhalten werden soll, die beiden Vorderräder VRL und VRR durch zwei unabhängige Front-Fahrtantriebsmotoren 8R, 8L angetrieben werden.

Die Verteilung des Antriebsmoments auf die beiden Fahrtantriebsmotoren 8R, 8L erfolgt dabei über eine zugeordnete Steuereinrichtung 9, etwa ein elektronisches Differential.

Soll dahin gegen ein kostengünstigerer Front-Fahrtantrieb eingesetzt wer - den, bei dem die beiden Vorderrädern VRL und VRR über ein (mechanisches) Differentialgetriebe 10 von einem gemeinsamen Front-Fahrtantriebsmotor 11 angetrieben werden, so ist bei den aus dem Stand der Technik bekannten Flurförderzeugen 1 der vollen Lenkeinschlag einer Drehschemel-Lenkung nicht mehr nutzbar.

Daher wird im Stand der Technik der Front-Fahrtantrieb hauptsächlich bei vierrädrigen Flurförderzeugen eingesetzt, wie etwa bei dem in Teilabbildung c) dargestellten Flurförderzeug 1, bei denen eine Lenkung verwendet wird, bei der die beiden Hinterräder HRL und HRR über eine geeignete Kinematik 22, etwa ein Lenktrapez, gemeinsam gelenkt werden. Bei solchen vierrädrigen Flurförderzeugen ist der minimale Kurvenradius ohnehin größer, dafür wird die Last über die vier Räder gleichmäßiger verteilt.

Auch bei dieser Art der Hinterrad-Lenkung ist es im Stand der Technik grundsätzlich bekannt, zwei unabhängige Antriebsmotoren 8R, 8L für die Vorderräder VRR, VRL einzusetzen, wie in Teilabbildung d) gezeigt.

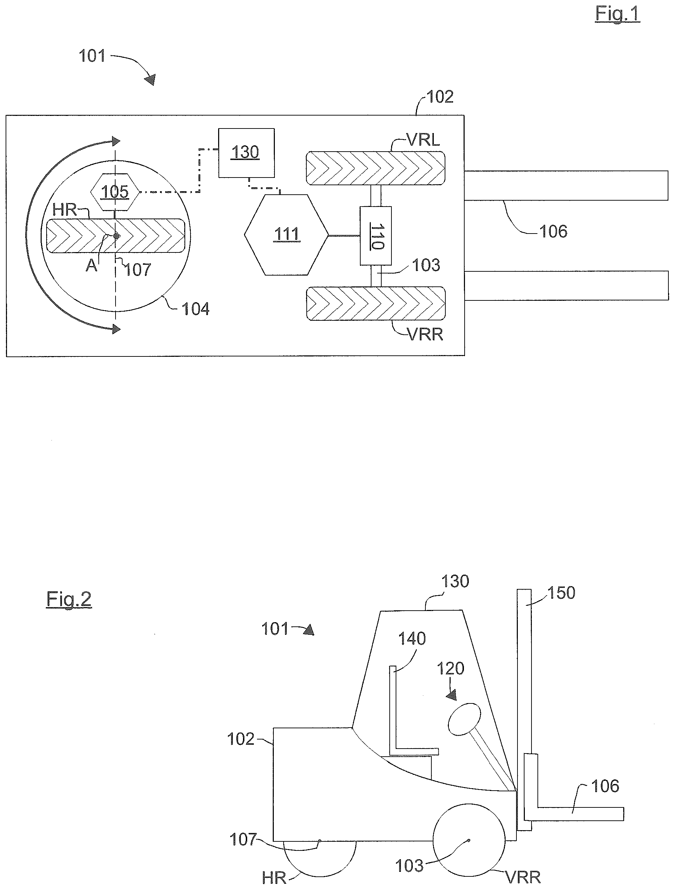

Das in Figur 1 gezeigte erste Ausführungsbeispiel eines erfindungsgemäßen Flurförderzeugs 101 vereint dahingegen die Vorteile der Drehschemel - Lenkung mit denen eines Front-Fahrtantriebs mit Differentialgetriebe.

Figur 1 zeigt in der gleichen Ansicht wie in den schematischen Darstellun - gen in Figur 6 das erfindungsgemäße Flurförderzeug 101 mit einem Fahrgestell 102, einer an dem Fahrgestell 102 gelagerten Vorderachse 103 einem in einem vorderen Bereich, bevorzugt vor den Vorderrädern VRL, VRR an dem Fahrgestell 102 vorgesehenen Lastaufnahmemittel 106 und einem über ein Differentialgetriebe 110 mit den zwei Vorderrädern VRL, VRR zum Antreiben von diesen gekoppelten Front-Antriebsmotor 111.

Das Hinterrad HR ist vermittels eines Drehschemels 104 um die (vertikale) Hinterrad-Hochachse A drehbar, vorzugsweise um 360° oder mehr drehbar an dem Fahrgestell 102 gelagert. Der Drehschemel 104 ist über einen in Figur 2 angedeuteten Lenkmechanismus 120 zum Einstellen eines gewünschten Lenkwinkels gekoppelt, wobei der Lenkmechanismus beispielsweise einen elektrischen, hydraulischen oder pneumatischen Lenkantriebsmotor (Servolenkung) umfassen kann.

Zusätzlich zu dem Front-Fahrtantriebsmotor 111, welcher die Vorderräder VRL und VRR zur Fahrt antreibt, ist bei dem erfindungsgemäßen Flurförderzeug 101 auch ein Heck-Fahrtantriebsmotor 105 vorgesehen, der deutlich kleiner dimensioniert sein kann als der Front-Antriebsmotor 111.

Eine Steuereinrichtung 130, beispielsweise mit einem entsprechend programmierten Schaltkreis, ist dazu ausgebildet, ein aktuell von dem Fahrer angefordertes Fahrtantriebsmoment für das Flurförderzeug 101 auf den Front-Fahrtantriebsmotor 111 und den Heck-Fahrtantriebsmotor 105 zu verteilen, wobei diese Verteilung vorzugsweise in Abhängigkeit wenigstens von einem aktuellen Lenkwinkel erfolgt.

Kommunikationsverbindungen zwischen der Steuereinrichtung 130 und anderen Komponenten, etwa den Motoren 105, 111 sind in den Figuren jeweils durch strichpunktierte Linien angedeutet. Dabei kann es sich sowohl um kabelgebundene Verbindungen wie auch um kabellose Verbindungen (etwa Funkverbindungen) handeln.

In der Seitenansicht von Figur 2 sind weiter schematisch eine Fahrerkabine 130, ein Fahrersitz 140 sowie ein Hubmast 150 angedeutet, an dem das Lastaufnahmemittel 106 in vertikaler Richtung auf und ab bewegt werden kann. Auf eine Darstellung der zum Heben der Lasten verwendeten Hub-Antriebseinrichtungen sowie weiterer Einzelheiten wurde verzichtet.

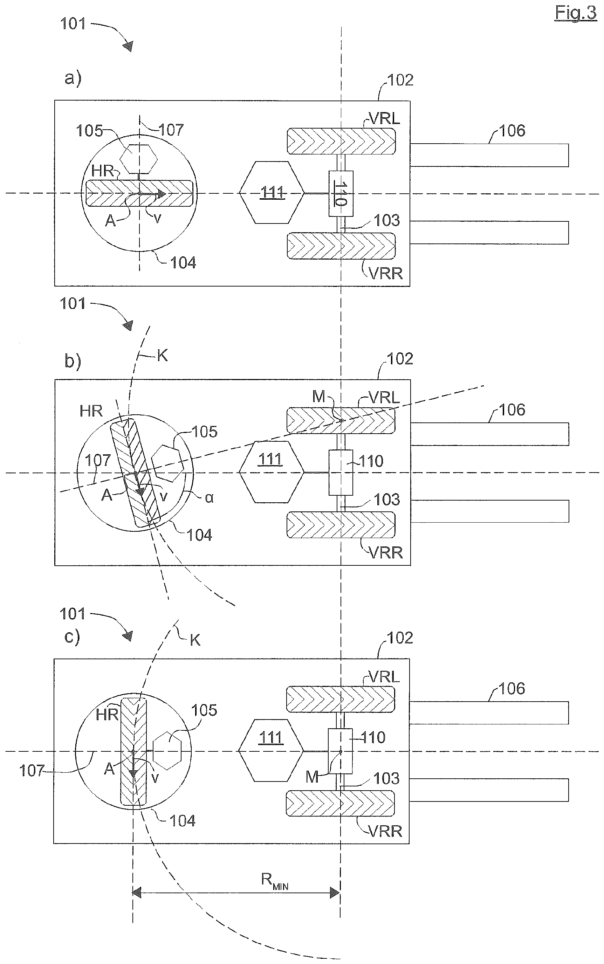

Figur 3 zeigt den Gegenstand von Figur 1 bei verschiedenen Lenkwinkeln.

Zur Erhöhung der Übersichtlichkeit wurde in diesen Figuren auf die Darstel - lung der Steuereinrichtung 130 und der zugehörigen Kommunikationsverbin - dungen verzichtet.

In Teilabbildung 3a) befinden sich der Drehschemel 104 und das Hinterrad HR in einer Geradeausfahrt-Stellung, die einem Lenkwinkel von 0° bezüglich einer gestrichelt dargestellten Fahrzeug-Längsachse L entspricht.

Teilabbildungen 3b) und 3c) zweigen den gleichen Gegenstand bei zwei weiteren Lenkwinkeln, die durch Drehen des Drehschemels 104 und des damit gekoppelten Hinterrads HR im Uhrzeigersinn aus der Geradeausfahrt-Stellung heraus nacheinander erreicht werden können, wobei das Flurförderzeug 101 sich längs einer Kurve K bewegt. Die aktuelle Fahrtrichtung des Hinterrads HR bei Rotation in Vorwärtsrichtung um die Hinterrad-Achse 107 ist dabei jeweils durch einen Pfeil v angegeben.

Spätestens beim Erreichen eines bestimmten, in Teilabbildung b) dargestellten Lenkwinkels (Grenzwinkel α) aus der Geradeausfahrt heraus, bei dem das Flurförderzeug 101 um eine Achse M dreht, die etwa der Hochachse des Vorderrads VRL auf der Kurven-Innenseite entspricht, wird dieses Vorderrad VRL blockiert. Ein reiner Frontantrieb mit mechanischem Differenzialgetriebe würde bei diesem Lenkwinkel und größeren nicht mehr funktionieren.

Daher ist erfindungsgemäß die (in Figur 3 nicht dargestellte) Steuereinrich - tung dazu eingerichtet, das angeforderte Fahrtantriebsmoment auf den Front-Fahrtantriebsmotor 111 und den Heck-Fahrtantriebsmotor 105 zu verteilen, wobei bevorzugt dann, wenn der Lenkwinkel größer als der in Figur 3b) dargestellte Grenzwinkel α ist, das angeforderte Fahrtantriebsmoment ausschließlich von dem Heck-Fahrtantriebsmotor 105 erzeugt wird.

Die erfindungsgemäße vorgesehene Drehschemel-Lenkung ermöglicht bei einem Lenkwinkel von 90°, wie in Teilabbildung 3c) dargestellt, einen mini - malen Lenk- bzw. Kurvenradius R_{MIN}, der dem Abstand zwischen der Hochachse A des Hinterrads HR und der Vorderachse 103 entspricht und damit den gleichen minimalen Kurvenradius wie bei dem in Figur 6a) dargestellten, bekannten Flurförderzeug.

Dabei wird das Fahrzeug entgegen dem Uhrzeigersinn um die Achse M gedreht, die dem Mittelpunkt der Vorderachse 103 enspricht, wobei das eine Vorderrad VRR sich vorwärts, das andere VRL rückwärts dreht.

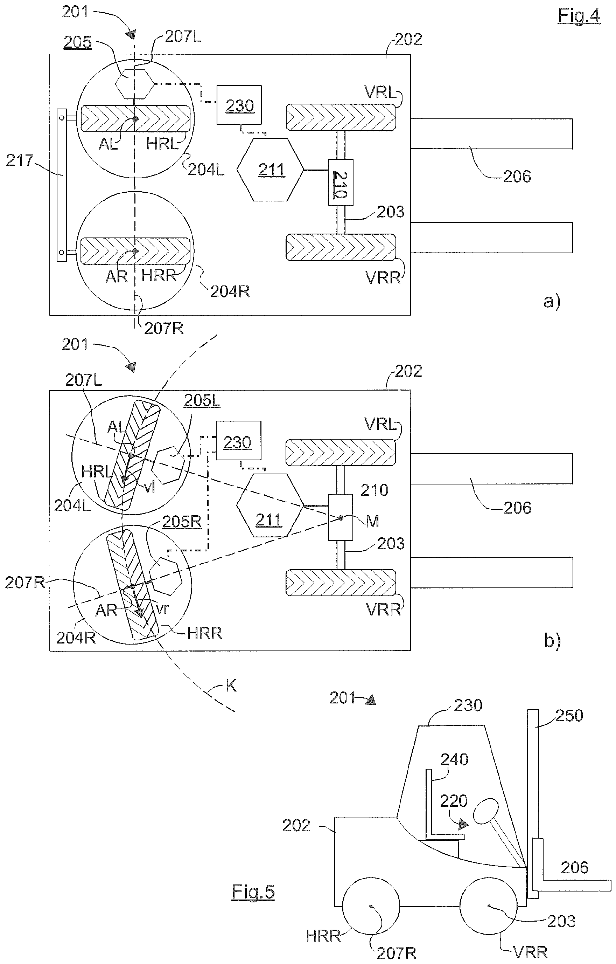

Wie in den Figuren 4 und 5 für ein zweites Ausführungsbeispiel illustriert, können statt einem Hinterrad mit Drehschemel-Lenkung auch zwei Hinterräder HRL und HRR vorgesehen sein, die jeweils an einem zugeordneten Drehschemel 204L und 204R so gelagert sind, dass sie um ihre jeweilige Hinterrad-Hochachse AR bzw. AL gedreht werden können.

Die Merkmale der zwei in den Teilabbildungen 4a) und 4b) dargestellten Varianten des zweiten Ausführungsbeispiels sind dabei mit Bezugszeichen versehen, die, soweit Zahlen verwendet wurden, durch Addition der Zahl 100 aus den Bezugszeichen der entsprechenden Merkmale des ersten Ausführungsbeispiels hervorgehen. Soweit Buchstaben als Bezugszeichen verwendet werden, werden für alle Ausführungsbeispiele die gleichen Buchstaben für einander entsprechende Merkmale eingesetzt.

Das zweite Ausführungsbeispiel wird nur insoweit näher beschrieben, als es sich vom ersten Ausführungsbeispiel unterscheidet, auf dessen vorstehende Beschreibung ansonsten verwiesen wird.

Es kann vorgesehen sein, dass bei dem erfindungsgemäßen Flurförderzeug 201 nur einer der Drehschemel, etwa der Drehschemel 204L über einen Heck-Fahrtantriebsmotor 205 angetrieben wird, wie in Teilabbildung 4a) dargestellt. Dabei können die beiden Drehschemel 204L und 204R über einen geeigneten Kopplungsmechanismus 217 gekoppelt sein.

Es ist in einer Variante auch möglich, beide Drehschemel 204L und 204R mit einem zugeordneten Heck-Fahrtantriebsmotor 205L und 205R auszustatten, um das jeweils zugeordnete Hinterrad HRL bzw. HRR zur Fahrt anzutreiben, wie in Teilabbildung 4b) dargestellt.

Teilabbildung 4b) zeigt das Flurförderzeug 201 dabei bei der Fahrt um eine Kurve K mit dem minimal möglichen Kurvenradius, der sich nur unwesentlich von dem mit einem dreirädrigen Flurförderzeug erreichbaren minimalen Radius (vgl. Fig. 3c) unterscheidet.

Der in Teilabbildung 4a) für die erste Variante nur sehr schematisch ange - deutete Kopplungsmechanismus 217 ist dabei bevorzugt so ausgebildet, dass er die in Teilabbildung 4b) für die zweite Variante dargestellte Stellung der beiden Hinterräder HRL und HRR (beide tangential zur Kurve K) auch in der ersten Variante, also bei nur einem zur Fahrt angetriebenen Hinterrad HRL ermöglicht.

Das erfindungsgemäße Flurförderzeug vereinigt die Wendigkeit der Drehschemel-Lenkung mit dem kostengünstigen Aufbau eines Front-Fahrtantriebes mit Differentialgetriebe.

## Patentansprüche

1. Flurförderzeug (101; 201), umfassend:
ein Fahrgestell (102; 202),
eine an dem Fahrgestell (102; 202) gelagerte Vorderachse (103; 203), zwei an gegenüberliegenden Längsenden der Vorderachse (103; 203) vorgesehene Vorderräder (VRL, VRR),
ein in einem vorderen Bereich, bevorzugt vor den Vorderrädern (VRL, VRR), an dem Fahrgestell (102; 202) vorgesehenes Lastaufnahmemittel (106; 206),
einen über ein Differentialgetriebe (110; 210) mit den zwei Vorderrädern (VRL, VRR) gekoppelten Front-Fahrtantriebsmotor (111; 211), um diese zur Fahrt anzutreiben,
ein vermittels eines Drehschemels (104; 204L, 204R) um eine Hinterrad-Hochachse (A; AL, AR) drehbar an dem Fahrgestell (102; 202) gelagertes Hinterrad (HR; HRL, HRR),
einen mit dem Drehschemel (104; 204L, 204R) gekoppelten Lenkmechanismus (120; 220) zum Einstellen eines Lenkwinkels des Hinterrades (HR; HRL, HRR),
einen mit dem Hinterrad (HR; HRL, HRR) gekoppelten Heck-Fahrtantriebsmotor (105; 205; 205R, 205L), um dieses zur Fahrt anzutreiben, und
eine Steuereinrichtung (130; 230), die dazu ausgebildet ist, ein aktuell angefordertes Fahrtantriebsmoment für das Flurförderzeug (101; 201) auf den Front-Fahrtantriebsmotor (111; 211) und den Heck-Fahrtantriebsmotor (105; 205; 205R, 205L) zu verteilen und zwar in Abhängigkeit wenigstens von einem aktuellen Lenkwinkel des Hinterrades (HR; HRL, HRR).

2. Flurförderzeug (101; 201) nach Anspruch 1,
**dadurch gekennzeichnet, dass** die Steuereinrichtung (130; 230) dazu ausgebildet ist, das aktuell angeforderte Fahrtantriebsmoment so zu verteilen, dass dann, wenn der Betrag eines aktuellen Lenkwinkels aus einer Geradeausfahrt-Stellung heraus größer als ein vorgegebener Grenzwinkel (a) ist, das aktuell angeforderte Fahrtantriebsmoment vorwiegend oder ausschließlich von dem Heck-Fahrtantriebsmotor (105; 205; 205R, 205L) erzeugt wird.

3. Flurförderzeug (101; 201) nach Anspruch 1 oder 2,
**dadurch gekennzeichnet, dass** eine von dem Heck-Fahrtantriebsmotor (105; 205; 205R, 205L) erzeugbare maximale Motorleistung kleiner ist als eine von dem Front-Fahrtantriebsmotor (111; 211) erzeugbare maximale Motorleistung.

4. Flurförderzeug (101; 201) nach einem der Ansprüche 1 bis 3,
**dadurch gekennzeichnet, dass** die Steuereinrichtung (130; 230) dazu ausgebildet ist, das aktuell angeforderte Fahrtantriebsmoment für das Flurförderzeug (101; 201) in Abhängigkeit von dem aktuellen Lenkwin - kel und einer aktuellen Drehzahl des Hinterrads (HR; HRL, HRR) auf den Front-Fahrtantriebsmotor (111; 211) und den Heck-Fahrtantriebsmotor (105; 205; 205R, 205L) zu verteilen.

5. Flurförderzeug (101; 201) nach einem der Ansprüche 1 bis 4,
**dadurch gekennzeichnet, dass** der Heck-Fahrtantriebsmotor (105; 205; 205R, 205L) ein Elektromotor ist.

6. Flurförderzeug nach einem der Ansprüche 1 bis 4,
**dadurch gekennzeichnet, dass** ein Lenkantrieb des Lenkmechanismus (120; 220) und der Heck-Fahrtantriebsmotor (105; 205; 205R, 205L) aus einer gleichen Energiequelle mit Energie versorgt werden, wobei bevorzugt der Lenkmechanismus (120; 220) ein hydraulischer Lenkmechanismus ist und der Heck-Fahrtantriebsmotor (105; 205; 205R, 205L) als Hydraulikmotor ausgebildet ist.

7. Flurförderzeug (101) nach einem der Ansprüche 1 bis 6,
**dadurch gekennzeichnet, dass** es sich um ein dreirädriges Flurförderzeug (101) mit einem Hinterrad (HR) und zwei Vorderrädern (VRR, VRL) handelt.

8. Flurförderzeug (201) nach einem der Ansprüche 1 bis 6,
**dadurch gekennzeichnet, dass** es sich um ein vierrädriges Flurförderzeug (201) mit zwei Hinterrädern (HRL, HRR) und zwei Vorderrädern (VRL, VRR) handelt, wobei jedes der zwei Hinterräder (HRL, HRR) um seine Hochachse (AL, AR) drehbar an dem Fahrgestell (202) gelagert ist.

9. Flurförderzeug (201) nach Anspruch 7,
**dadurch gekennzeichnet, dass** es einen einzigen Heck-Fahrtantriebsmotor (205) umfasst, der mit nur einem (HRL) der zwei Hinterräder (HRR, HRL) gekoppelt ist, um dieses zur Fahrt anzutreiben.

10. Flurförderzeug (201) nach Anspruch 8,
**dadurch gekennzeichnet, dass** es zwei Heck-Fahrtantriebsmotoren (205L, 205R) umfasst, die jeweils mit einem der zwei Hinterräder (HRL, HRR) gekoppelt sind, um diese zur Fahrt anzutreiben.

11. Flurförderzeug (101; 201) nach einem der vorhergehenden Ansprüche,
**dadurch gekennzeichnet, dass** es ein Gabelstapler ist, vorzugsweise ein Gegengewichtsstapler oder Schubmaststapler.

## Claims

1. Industrial truck (101; 201), comprising:
a chassis (102; 202), a front axle (103; 203) mounted on the chassis (102; 202), two front wheels (VRL, VRR) provided on opposite longitudinal ends of the front axle (103; 203), one load-lifting means (106; 206) provided in a front region on the chassis (102; 202), preferably in front of the front wheels (VRL, VRR), a front drive motor (111; 211) coupled to the two front wheels (VRL, VRR) by means of a differential gear (110; 210) in order to drive these wheels, a rear wheel (HR; HRL, HRR) mounted on the chassis (102; 202) by means of a pivot plate (104; 204L, 204R) such that said rear wheel can rotate about a rear wheel vertical axis (A; AL, AR), a steering mechanism (120; 220) coupled to the pivot plate (104; 204L, 204R) for adjusting a steering angle of the rear wheel (HR; HRL, HRR), a rear drive
motor (105; 205; 205R, 205L) coupled to the rear wheel (HR; HRL; HRR) in order to drive said rear wheel, and a control device (130; 230) which is designed to distribute a currently required driving torque for the industrial truck (101; 201) to the front drive motor (111; 211) and the rear drive motor (105; 205; 205R, 205L), specifically depending on at least one current steering angle of the rear wheel (HR, HRL, HRR).

2. Industrial truck (101, 201) according to claim 1, **characterised in that** the control device (130; 230) is designed to distribute the currently required driving torque such that when a current steering angle from a straight ahead position is greater than a predetermined limit angle (α), the currently required driving torque is predominantly or exclusively generated by the rear drive motor (105; 205; 205R, 205L).

3. Industrial truck (101; 201) according to either claim 1 or claim 2, **characterised in that** a maximum motor output that can be generated by the rear drive
motor (105; 205; 205R, 205L) is less than a maximum motor output that can be generated by the front drive motor (111; 211).

4. Industrial truck (101; 201) according to any of claims 1 to 3, **characterised in that** the control device (130; 230) is designed to distribute the currently required driving torque for the industrial truck (101; 201) to the front drive motor (111; 211) and the rear drive motor (105; 205; 205R, 205L) depending on the current steering angle and a current rotational speed of the rear wheel (HR; HRL, HRR).

5. Industrial truck (101; 201) according to any of claims 1 to 4, **characterised in that** the rear drive motor (105; 205; 205R, 205L) is an electric motor.

6. Industrial truck according to any of claims 1 to 4, **characterised in that** a steering drive of the steering mechanism (120; 220) and the rear drive motor (105; 205; 205R, 205L) are supplied with power from a same power source, the steering mechanism (120; 220) preferably being a hydraulic steering mechanism and the rear drive motor (105; 205; 205R, 205L) being designed as a hydraulic motor.

7. Industrial truck (101) according to any of claims 1 to 6, **characterised in that** it is a three-wheeled industrial truck (101) which has a rear wheel (HR) and two front wheels (VRR, VRL).

8. Industrial truck (201) according to any of claims 1 to 6, **characterised in that** it is a four-wheeled industrial truck (201) which has two rear wheels (HRL, HRR) and two front wheels (VRL, VRR), each of the two rear wheels (HRL, HRR) being mounted on the chassis (202) such that said wheel can rotate about the vertical axis (AL, AR) thereof.

9. Industrial truck (201) according to claim 7, **characterised in that** it comprises a single rear drive motor (205) which is coupled to only one (HRL) of the two rear wheels (HRR, HRL) in order to drive this wheel.

10. Industrial truck (201) according to claim 8, **characterised in that** it comprises two rear drive motors (205L, 205R), each coupled to one of the two rear wheels (HRL, HRR) in order to drive these wheels.

11. Industrial truck (101; 201) according to any of the preceding claims, **characterised in that** it is a forklift, preferably a counterbalanced truck or a reach truck.

## Revendications

1. Chariot de manutention (101; 201), comportant :
un châssis (102 ; 202),
un essieu avant (103 ; 203) monté sur le châssis (102 ; 202),
deux roues avant (VRL, VRR) prévues aux extrémités longitudinales opposées de l'essieu avant (103 ; 203),
un moyen de réception de charge (106 ; 206) prévu sur le châssis (102 ; 202) dans une zone avant, de préférence devant les roues avant (VRL, VRR),
un moteur de propulsion avant (111 ; 211) accouplé aux deux roues avant (VRL, VRR) par l'intermédiaire d'un engrenage différentiel (110 ; 210), afin de propulser celles-ci,
une roue arrière (HR ; HRL, HRR) montée sur le châssis (102 ; 202) de manière à pouvoir tourner autour d'un axe vertical de roue arrière (A ; AL, AR) au moyen d'un bogie (104 ; 204L, 204R),
un mécanisme de direction (120 ; 220) accouplé au bogie (104 ; 204L, 204R) et permettant le réglage d'un angle de direction de la roue arrière (HR ; HRL, HRR),
un moteur de propulsion arrière (105 ; 205 ; 205R, 205L) accouplé à la roue arrière (HR ; HRL, HRR), afin de propulser celle-ci, et
un dispositif de commande (130 ; 230), qui est conçu pour répartir un couple de propulsion actuellement demandé pour le chariot de manutention (101 ; 201) sur le moteur de propulsion avant (111 ; 211) et le moteur de propulsion arrière (105 ; 205 ; 205R, 205L) et ce en fonction d'au moins un angle de direction actuel de la roue arrière (HR ; HRL, HRR).

2. Chariot de manutention (101 ; 201) selon la revendication 1,
**caractérisé en ce que** le dispositif de commande (130 ; 230) est conçu pour répartir le couple de propulsion actuellement demandé de sorte que, lorsque la valeur d'un angle de direction actuel à partir d'une position de conduite en ligne droite est supérieure à un angle limite (α) prédéfini, le couple de propulsion actuellement demandé est principalement ou exclusivement produit par le moteur de propulsion arrière (105 ; 205 ; 205R, 205L).

3. Chariot de manutention (101 ; 201) selon la revendication 1 ou 2,
**caractérisé en ce qu'**une puissance maximale de moteur pouvant être produite par le moteur de propulsion arrière (105 ; 205 ; 205R, 205L) est inférieure à une puissance maximale de moteur pouvant être produite par le moteur de propulsion avant (111 ; 211) .

4. Chariot de manutention (101 ; 201) selon l'une quelconque des revendications 1 à 3,
**caractérisé en ce que** le dispositif de commande (130 ; 230) est conçu pour répartir le couple de propulsion actuellement demandé pour le chariot de manutention (101 ; 201) en fonction de l'angle de direction actuel et d'une vitesse de rotation actuelle de la roue arrière (HR ; HRL, HRR) sur le moteur de propulsion avant (111 ; 211) et le moteur de propulsion arrière (105 ; 205 ; 205R, 205L).

5. Chariot de manutention (101 ; 201) selon l'une quelconque des revendications 1 à 4,
**caractérisé en ce que** le moteur de propulsion arrière (105 ; 205 ; 205R, 205L) est un moteur électrique.

6. Chariot de manutention selon l'une quelconque des revendications 1 à 4,
**caractérisé en ce qu'**un entraînement de direction du mécanisme de direction (120 ; 220) et le moteur de propulsion arrière (105 ; 205 ; 205R, 205L) sont alimentés en énergie à partir d'une même source d'énergie, dans lequel le mécanisme de direction (120 ; 220) est de préférence un mécanisme de direction hydraulique et le moteur de propulsion arrière (105 ; 205 ; 205R, 205L) est réalisé sous la forme d'un moteur hydraulique.

7. Chariot de manutention (101) selon l'une quelconque des revendications 1 à 6,
**caractérisé en ce qu'**il s'agit d'un chariot de manutention (101) à trois roues pourvu d'une roue arrière (HR) et de deux roues avant (VRR, VRL).

8. Chariot de manutention (201) selon l'une quelconque des revendications 1 à 6,
**caractérisé en ce qu'**il s'agit d'un chariot de manutention (201) à quatre roues pourvu de deux roues arrière (HRL, HRR) et de deux roues avant (VRL, VRR), dans lequel chacune des deux roues arrière (HRL, HRR) est montée sur le châssis (202) de manière à pouvoir tourner autour de son axe vertical (AL, AR).

9. Chariot de manutention (201) selon la revendication 7,
**caractérisé en ce qu'**il comporte un seul moteur de propulsion arrière (205), qui n'est accouplé qu'à une (HRL) des deux roues arrière (HRR, HRL), afin de propulser celle-ci.

10. Chariot de manutention (201) selon la revendication 8,
**caractérisé en ce qu'**il comporte deux moteurs de propulsion arrière (205L, 205R), qui sont accouplés respectivement à l'une des deux roues arrière (HRL, HRR), afin de propulser celles-ci.

11. Chariot de manutention (101 ; 201) selon l'une quelconque des revendications précédentes,
**caractérisé en ce qu'**il s'agit d'un chariot élévateur, de préférence d'un chariot élévateur à contrepoids ou d'un chariot élévateur à fourche rétractable.
